# FASCICULE DE BREVET EUROPEEN

(11) **EP 1 606 097 B1**
(45) Date de publication et mention de la délivrance du brevet: **02.08.2006**
(21) Numéro de dépôt: 04709260.6
(22) Date de dépôt: 09.02.2004
(51) Int. Cl.: B29C 70/34, F04D 29/54, B29C 70/44

(54) **PROCEDE DE FABRICATION DE PIECES EN COMPOSITE A MATRICE POLYIMIDE**
VERFAHREN ZUR HERSTELLUNG VON VERBUNDFORMTEILEN MIT EINEM POLYAMIDMATRIX
METHOD OF PRODUCING POLYIMIDE MATRIX COMPOSITE PARTS

(30) Priorité: 26.03.2003 FR 0303696
(43) Date de publication de la demande: 21.12.2005
(73) Titulaire: AIRCELLE, 76700 Gonfreville l'Orcher (FR)
(72) Inventeur: CHEVIN, Jean-Pierre, F-76700 Gainneville (FR); MARCHANT, Pascal, Eric, Jean, F-76700 Gainneville (FR)
(74) Mandataire: Chevalier, Renaud Philippe
(86) Numéro de dépôt international: PCT/FR2004/000285
(87) Numéro de publication internationale: WO 2004/087405

(56) Documents cités:
- DE-A- 19 723 845
- US-A- 4 197 339
- US-A- 5 104 474
- US-A- 5 312 579
- US-A- 5 597 435
- US-A- 5 686 038
- US-A- 6 036 900

## Description

L'invention concerne le domaine de pièces en matériau composite résistant à haute température, telles les aubages de redresseur sur les turboréacteurs, et comportant des fibres de renfort noyées dans une matrice de résine polymérisable à chaud, lesdites pièces pouvant présenter une plate-forme externe, une plate-forme interne et au moins une aube pleine reliant lesdites plates-formes.

On utilise de plus en plus des matériaux composites à base de fibres de carbone et d'une matrice de résine polymérisable à chaud, pour réaliser des pièces situées dans les zones froides de turbomachines d'aviation, notamment à usage militaire. Ces composites présentent en effet d'excellentes qualités mécaniques et une densité nettement inférieure à celle des alliages métalliques habituellement utilisés.

Le choix du type de résine est fait notamment en fonction de la température à laquelle sera soumise la pièce dans les conditions normales de fonctionnement de la turbomachine.

On connaît le procédé "resin transfer molding" ou RTM consistant à disposer les fibres de renfort dans un moule à la forme de la pièce finie, à injecter de la résine liquide sous basse pression dans le moule et à polymériser la résine maintenue sous pression. Ce procédé permet d'obtenir des pièces variées. Cependant, les résines organiques employées avec ce procédé sont du type époxyde bismaléimides et n'ont pas une résistance en température suffisante pour une application à ces pièces de turbomachine.

En effet, les résines organiques résistant aux températures plus élevées ne présentent pas une fluidité suffisante avant polymérisation.

On utilise alors soit des nappes de tissu, soit des nappes unidirectionnelles, c'est à dire des nappes dont les fibres sont parallèles et maintenues entre elles par la résine, pour réaliser la pièce par drapage, ces tissus ou ces nappes de fibres étant préimprégnés d'une résine, résistant à des températures plus élevées, sur des outillages spécifiques et on procède à la polymérisation dans un moule permettant une compression de la pièce.

La demande française déposée sous le n° FR 97 02 663 propose un procédé pour réaliser des pièces creuses à paroi mince en composite stratifié à base de résine polyimide polymérisable à chaud "PMR 15", "PMR15" étant une marque de la société CYTEC. Ce procédé consiste à réaliser un noyau en élastomère silicone, ayant la forme de la cavité de la pièce et qui est destructible à haute température, à draper le noyau par au moins une couche de fibres de renfort imprégnées de résine, à disposer l'ensemble noyau + fibres préimprégnées dans un moule, à polymériser sous compression puis à démouler et retirer le noyau. Le moule comporte une partie femelle supportant l'une des parois de la pièce et une partie mâle supportant l'autre paroi et susceptible de coulisser dans la partie femelle lors de la polymérisation. La compression exercée par le moule pendant la polymérisation, associée à l'expansion thermique du noyau en élastomère silicone, permet de faire fluer la matière composite pour réduire les porosités provenant des bulles d'air emprisonnées entre les nappes de fibres ainsi que des émissions gazeuses de la résine pendant la polymérisation, ce qui chasse la résine en excès et augmente la densité en fibres.

Ce procédé décrit dans ce document s'applique à des pièces creuses ayant des parois minces.

Les charactéristiques du préambule de la revendication 1 sont connus du document US-A-5 597 435.

Dans le cas de la réalisation de carters moteur en matériau composite stratifié présentant une plate-forme extérieure, une plate-forme intérieure et au moins une aube pleine reliant lesdites plates-formes, par polymérisation dans un seul cycle, les émissions gazeuses de la résine pendant le cycle de polymérisation seraient trop abondantes pour permettre un niveau satisfaisant de porosité dans les parois, du fait de l'épaisseur importante des parois constituant les aubes et les plates-formes, ce qui entraînerait notamment un mauvais état de surface dont celui des parois délimitant la veine du flux gazeux à travers le redresseur. Or, l'état de surface est un facteur influant sur le rendement du redresseur et au-delà des turbomachines.

L'importance du dégagement de volatils dépend du polyimide choisi. Or, pour des questions de sécurité du personnel des ateliers de fabrication, il est question de prohiber l'emploi de la résine "PMR 15" et de la remplacer par d'autres polyimides tels "Avimid-R" "Avimid-R" étant une marque de la société Cytec, qui dégagent encore plus de volatils que le PMR15 au cours de la polymérisation.

Le but de l'invention est de proposer un procédé pour réaliser des aubages de redresseurs en matériau composite à matrice polyimide dont les parois délimitant notamment la veine de flux gazeux présentent un bon état de surface.

L'invention se base sur le fait que la majorité des gaz volatils se dégage au cours de la première phase de montée en température du cycle de polymérisation au cours de laquelle les monomères s'assemblent pour former des réseaux de petites tailles (dimères, trimères) indépendants les uns des autres, la formation de chaînes longues et réticulées entre elles se faisant lors de la phase suivante de montée en température et s'accompagnant d'un faible dégagement de gaz volatils.

Le procédé selon l'invention est caractérisé par les étapes suivantes :
a) on réalise, en tant qu'éléments de structure séparés, les parties essentielles des plates-formes, des aubes et des zones de raccordement aubes/plates-formes, par superposition ou enroulement des couches de fibres de renfort préimprégnées de résine devant constituer lesdits éléments de structure à l'exception des couches externes devant former au moins la paroi de délimitation de la veine de flux gazeux à travers le redresseur,
b) on imidise lesdits éléments de structure séparés,
c) on assemble lesdits éléments de structure séparés et imidisés,
d) on ajoute les couches externes de fibres de renfort préimprégnées de résine pour constituer la pièce,
e) on dispose la pièce ainsi constituée dans un ensemble moule/contre-moule de polymérisation sous compression, et
f) on polymérise la pièce en la soumettant à des efforts de compression.

Par "imidiser", on entend que l'on pré-polymérise les éléments de structure séparés, c'est-à-dire que l'on chauffe lesdits éléments selon une loi de montée en température établie de manière à fixer le réseau monomère sans créer de chaînes covalentes. Pendant cette opération d'imidisation, la plus grande partie des gaz volatils est éliminée.

Lors de l'étape b), les éléments à imidiser sont disposés dans des moules appropriés qui permettent l'évacuation des gaz et le fluage de la résine en excès et qui impriment aux pièces imidisées leur forme finale.

A la fin de l'opération d'imidisation, les éléments de structure imidisés peuvent présenter un état de surface imparfait qui sera rectifié au cours de l'étape de polymérisation.

L'étape d'imidisation conduit en effet à des éléments imidisés présentant des manques de résine essentiellement en surface. L'ajout et la polymérisation des couches de préimprégnés non imidisés permet d'atténuer, voire supprimer, ces défauts.

Lorsqu'on procède à l'opération de polymérisation des éléments imidisés, rassemblés et recouverts de couches de préimprégnés frais ayant une faible épaisseur par rapport à l'épaisseur totale des éléments imidisés, les gaz volatils issus de ces couches de préimprégnés non imidiisés ou sont évacués lors d'une première phase de montée en température, les excès de résine des couches externes viennent combler les pores des éléments de structure préalablement imidisés qui ne dégagent plus de volatils. Lors de la deuxième phase de montée de température qui consiste à la polymérisation proprement dite, de l'ensemble de la pièce, c'est-à-dire à la création de chaînes covalentes dans l'ensemble de la pièce, il n'y a presque plus de dégagement de gaz volatils, et la pièce est soumise à une forte compression, ce qui entraîne le fluage de la résine, et un état de surface conforme des couches externes ajoutées aux éléments de structures imidisés.

Avantageusement, on rajoute les couches externes de préimprégnés frais, en drapant la face intrados d'une aube et les parties adjacentes des faces internes des plates-formes avec des premières couches de préimprégnés de raccordement, et en drapant la face extrados d'une aube et les parties adjacentes des faces internes des plates-formes avec des deuxièmes couches de préimprégnés de raccordement.

Ainsi, après polymérisation sous compression, ces couches de préimprégnés forment des plis présentant un excellent état de surface et assurant une grande rigidification de la pièce réalisée.

D'autres avantages et caractéristiques de l'invention ressortiront à la lecture de la description suivante faite à titre d'exemple et en référence aux dessins annexés dans lesquels :
- la figure 1 est une section d'un secteur de redresseur selon un plan contenant l'axe d'une turbomachine ;
- la figure 2 est une vue de face du secteur de la figure 1 ;
- les figures 3 et 4 montrent respectivement les outillages et l'empilage de couches de préimprégnés pour réaliser les parties structurales essentielles des plates-formes interne et externe ;
- la figure 5 montre la réalisation d'un raccord aube/plate-forme à partir d'une bande de préimprégné ;

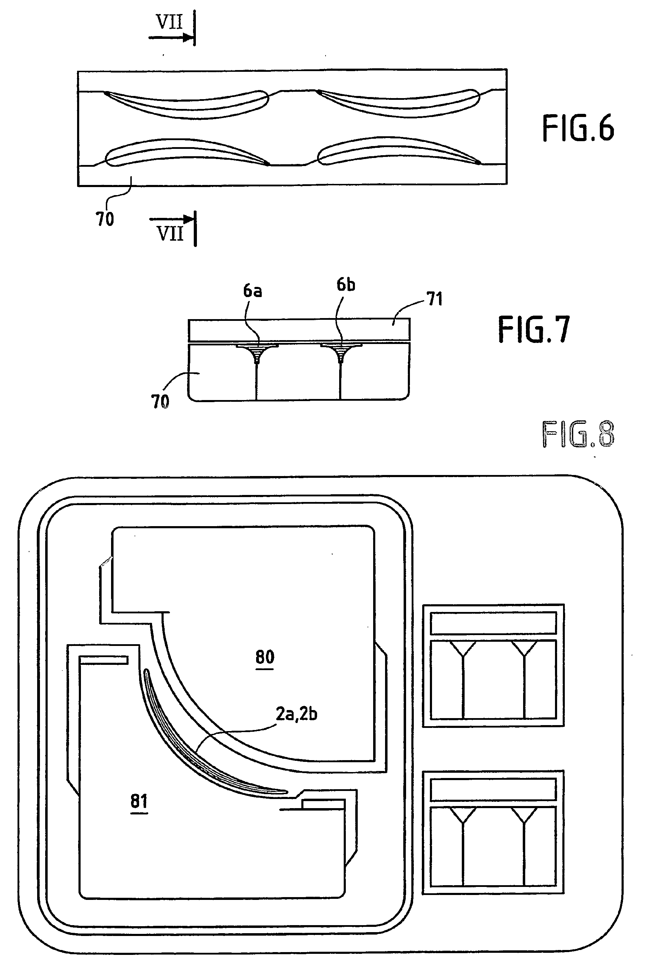

- la figure 6 montre les outillages utilisés pour imidiser les raccords aubes/plates-formes ;
- la figure 7 est une coupe selon la ligne VII VII de la figure 6 ;
- la figure 8 montre la disposition des divers outillages dans une vessie en film de polyimide notamment « Kapton » , « Kapton » étant une marque de la société Dupont ;
- la figure 9 représente la courbe des températures au cours de l'opération d'imidisation ;
- la figure 10 représente la courbes des températures au cours de l'opération de polymérisation ; et
- la figure 11 montre les couches de frais à rajouter sur les faces intrados et extrados des aubes ;

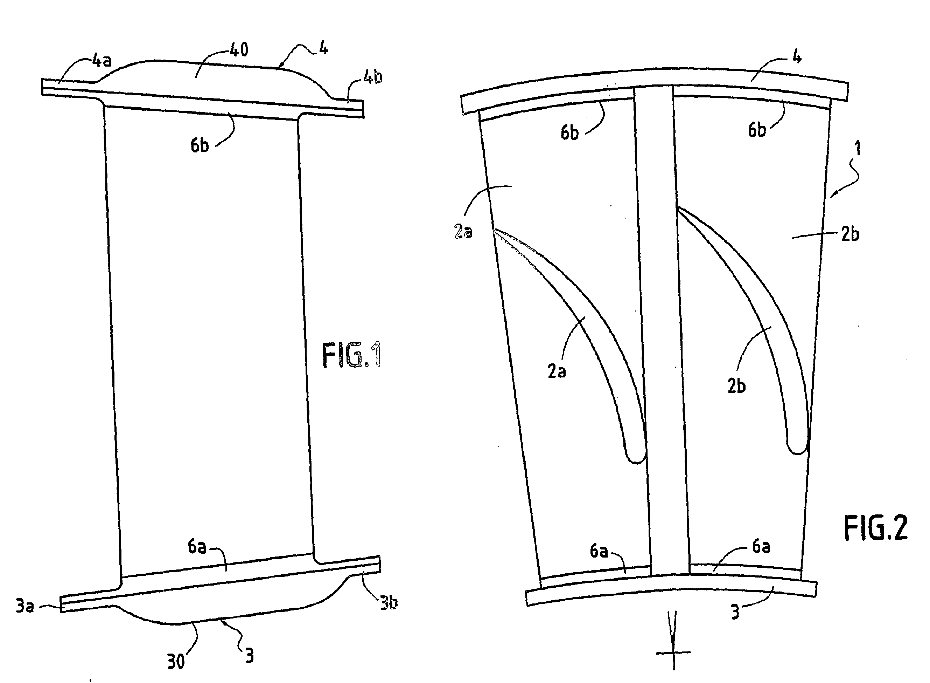

Les figures 1 et 2 montrent un secteur monobloc 1 de redresseur de compresseur d'une turbomachine d'aviation, réalisé en matériau composite stratifié comportant des fibres de renfort noyées dans une résine polymérisée à chaud.

Ce secteur 1 présente deux aubes 2a et 2b qui s'étendent radialement entre une plate-forme interne 3 et une plate-forme externe 4.

Les bords amont 4a et aval 4b de la plate-forme externe 4 ont une épaisseur inférieure à celle de la partie médiane de cette plate-forme 4.

Les bords amont 3a et avant 3b de la plate-forme interne 3 ont une dimension radiale inférieure à celle de la partie centrale.

Les références 6a et 6b désignent les zones de raccordement des aubes 2a, 2b avec les plates-formes interne 3 et externe 4.

Selon la présente invention, le secteur 1 est réalisé en plusieurs éléments de structure séparés par superposition ou enroulement de nappe unidirectionnelles ou de tissus de fibres de renfort, notamment de fibres de carbone, préalablement imprégnées de résine organique polymérisable à chaud, notamment une résine polyimide résistant à des températures de l'ordre de 300°C.

La plate-forme externe 4 est ainsi réalisée à partir d'un élément de structure, référencé 40 sur la figure 1.

La plate-forme interne 3 est réalisée à partir d'un élément de structure, référencé 30.

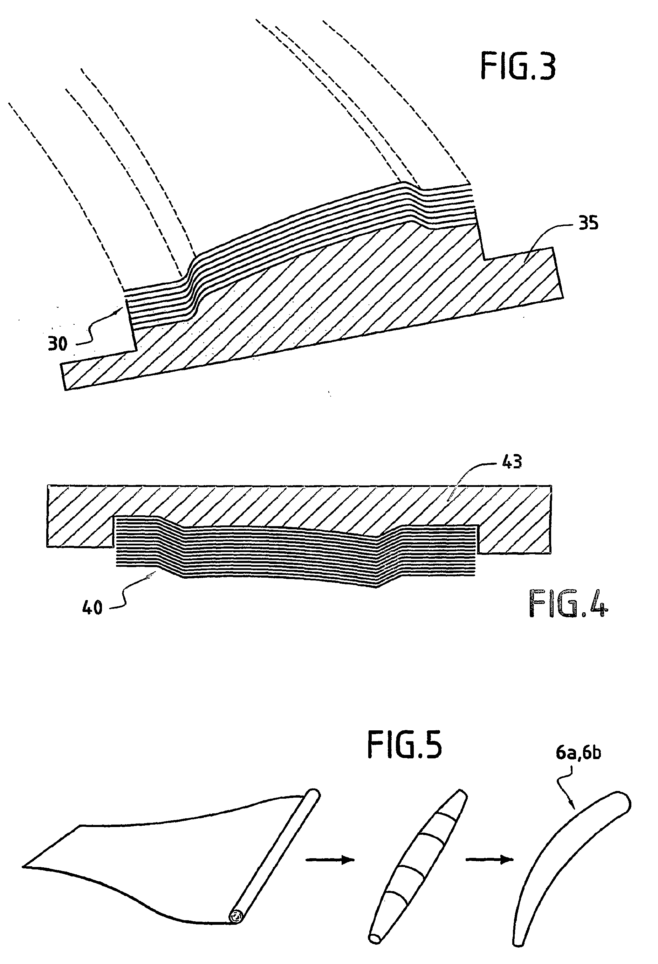

Les parties principales 30 et 40 des plates-formes interne 3 et externe 4 sont réalisées de manière traditionnelle par empilage, pressage et marouflage de pièces prédécoupées dans une rouleau de tissu ou nappe préimprégné de résine, sur des outillages référencés 35 et 43 sur les figures 3 et 4. Plusieurs pièces de tissu préimprégnées forment l'élément de structure 30 et l'élément de structure 40. Le nombre de pièces de tissu formant chaque élément de structure 30 ou 40 est choisi en fonction de la rigidité et de l'épaisseur souhaitées. Les directions des fibres de renfort de chaque pièce de tissu sont disposées soit dans le sens axial, soit dans le sens circonférentiel soit à 45°de ces sens et sont spécifiées dans un mode opératoire précis.

Les outillages référencés 35 et 43, sur les figures 3 et 4, sont des parties mâles de moules d'imidisation dont les parties femelles ne sont pas représentées sur les dessins.

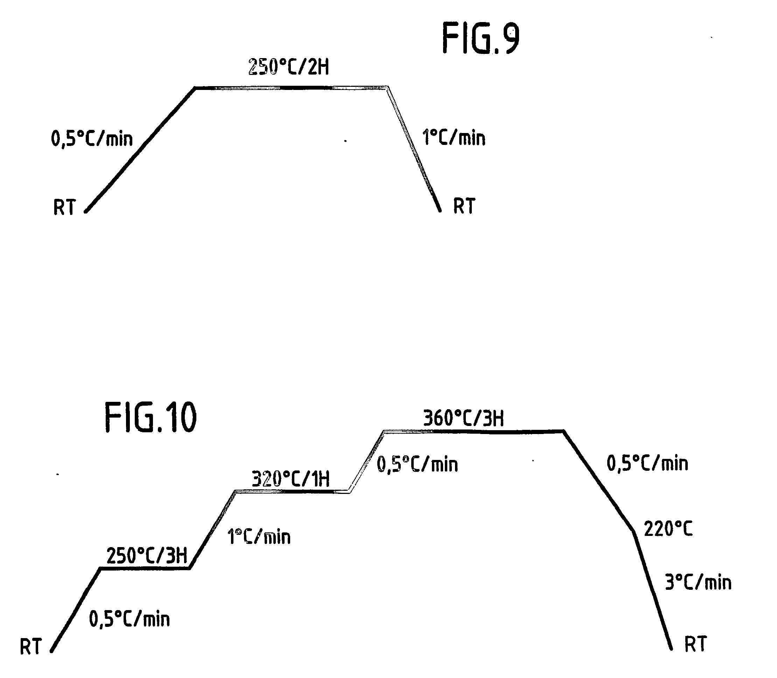

Les zones de raccordement aubes/plates-formes, référencées 6a, 6b sur la figure 2, côté intrados et côté extrados, sont également réalisées sous la forme d'éléments de structure séparés. Comme cela est montré sur la figure 5, chacune de ces zones de raccordement est réalisée par roulage d'une bande de tissu préimprégnée dans le sens transversal à la direction des fibres, et disposée dans l'empreinte d'un moule approprié 70 visible sur les figures 9 et 10, et comportant un couvercle 71.

Le coeur des aubes 2a, 2b est également réalisé par un empilage de bandes de nappe ou tissu préimprégné frais et est disposé entre un outillage intrados 80 et un outillage extrados 81, afin de constituer des éléments de structure séparés, ainsi que cela est représenté sur la figure 2.

Les éléments de structure séparés 30, 40, les zones 6a, 6b de raccordement aubes/plates-formes et le coeur des aubes 2a et 2b sont disposés serrés dans leur outillage ainsi que cela a été décrit ci-dessus. Ces outillages comportent des feutres pour l'évacuation des gaz volatils et le fluage de la résine. Tous les outillages sont disposés dans une même vessie polyimide tel un film « Kapton 82 », « Kapton » étant une marque de la société Dupont et on procède alors à l'imidisation de tous les éléments de structure séparés constituant un secteur 1, dans un autoclave.

Le cycle d'imisation en autoclave dépend du type de résine utilisé.

Pour les polymides, on fait monter, par exemple, la température de 20°C à 250°C avec un gradient de 0,5°C/min, puis on maintient la température à 250°C pendant une durée de 120 min.. On refroidit avec un gradient de 1°C/min et on démoule les pièces lorsque la température atteint 40°C. On maintient un vide relatif de -50 mbars sous vessie pendant toute la durée du cycle d'imidisation. La figure 9 montre la courbe des températures par rapport au temps.

Durant le cycle d'imidisation, le réseau monomère est transformé en un réseau de dimères et de trimères notamment. Environ 80 % des gaz volatils sont éliminés durant cette étape.

Lorsque les éléments de structure séparés ont été imidisés et démoulés, on les rassemble dans un outillage spécifique en disposant une pièce de nappe ou tissu préimprégnée entre deux éléments de structure voisins, notamment entre la partie 40 de la plate-forme extérieure 4,ou la partie 30 de la plate-forme intérieure 3, et les zones de raccordement 6a, 6b des plates-formes et des coeurs des aubes 2a, 2b.

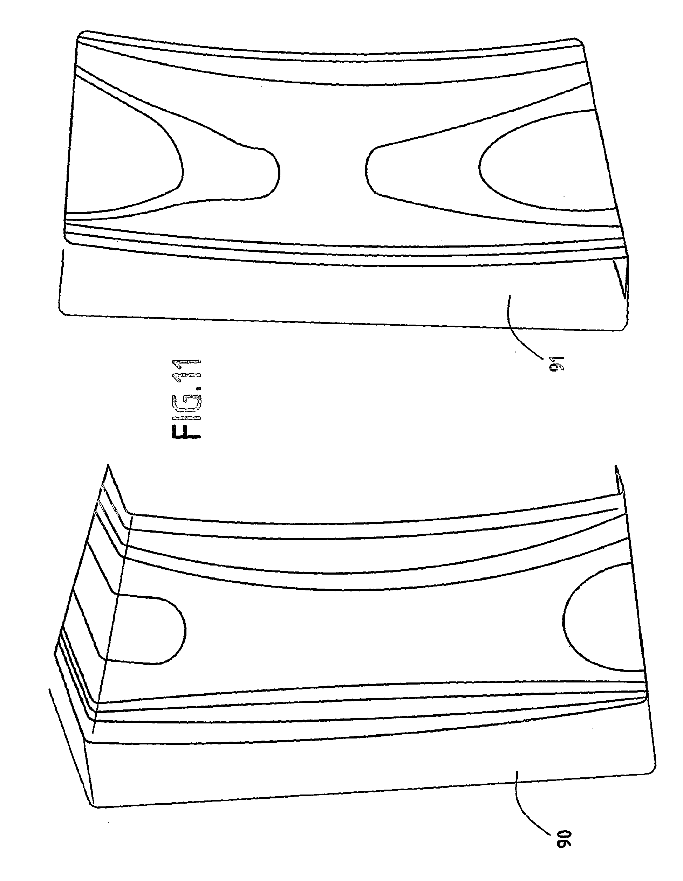

On procède ensuite au drapage des plis externes en frais sur les faces intrados et extrados des coeurs des aubes 2a, 2b imidisés et des surfaces en vis-à-vis des plates-formes interne 3 et externe 4. Pour ce faire, on dispose sur des outillages spécifiques, ainsi que cela est montré sur la figure 11, des couches de tissu 90, 91 préimprégnées de résine et prédécoupées aux bonnes dimensions.

Un film antiadhérent est disposé sur les outillages de drapage avant de disposer les premiers plis.

Les outillages de drapage sont des éléments d'un moule de polymérisation sous haute compression du secteur 1 constitué des éléments de structure séparés imidisés et rassemblés et des nappes de préimprégné frais disposés entre les divers éléments et recouvrant les faces du secteur 1 qui doivent délimiter la veine de flux de gaz à travers le secteur 1 lors du fonctionnement du compresseur comportant un redresseur réalisé avec ce type de secteur.

Lors de l'étape d'imidisation des éléments de structure séparés, une grande partie des volatils a été évacuée.

Lors de l'étape de polymérisation du secteur 1, seules les nappes de préimprégné frais dégageront des gaz volatils au début du cycle de polymérisation. Comme ces nappes de fibres préimprégnées ou « en frais » couvrent une grande surface d'éléments imidisés qui est peut-être poreuse, la résine liquéfiée des nappes ou tissus préimprégnés frais va combler ces pores.

Les courbes de montée en température, lors de la polymérisation sont fonction de la résine utilisée. S'il s'agit de polyimide, comme montré en exemple sur la figure 10, on fait grimper la température, de 20°C à 250°C avec un gradient de 0,5°C/min, on maintient ensuite la température à 250°C pendant 3 heures, puis on procède à une nouvelle montée en température de 250°C à 320°C avec un gradient de 1°C/min et on maintient la température à 320°C pendant 1 heure, et enfin à une montée jusqu'à 360°C avec un gradient de 0,5°C/min et un palier de 3 heures à 360°C. Le refroidissement se fait selon deux phases ayant des vitesses de refroidissement différents.

Au cours de la première phase de refroidissement, on abaisse la température de 0,5°C/min jusqu'à ce qu'on atteigne une température de 220°C, puis, au cours de la deuxième phase de refroidissement, on abaisse la température à une vitesse de 3°C/min.

Au début de l'étape d'imidisation des plis de tissus préimprégnés frais, c'est à dire au cours de la première partie de l'étape de polymérisatio, , la pièce n'est soumise à aucun effort de compression.

Dès la fin de l'imidisation des couches rapportées, on procède à une montée de la compression de la pièce pour qu'elle atteigne un niveau de pression suffisant pour assurer une bonne polymérisation (par exemple 35 bars), lorsque la température de la pièce atteint 310°C. On maintient ce taux de compression jusqu'à la fin du refroidissement.

Ce taux de compression très élevé permet de procurer un excellent état de surface des parois délimitant la veine de flux gazeux.

On maintien un vide relatif de -50mbars pendant toute la durée du cycle de polymérisation.

## Revendications

1. Procédé de fabrication de pièces (1) en matériau composite résistant à haute température, telles les aubages de redresseur, ledit matériau comportant des fibres de renfort noyées dans une matrice de résine polyimide polymérisée à chaud, lesdites pièces (1) présentant une plate-forme interne (3), une plate-forme externe (4) et au moins une aube pleine (2a, 2b) reliant lesdites plates-formes (3, 4), **caractérisé par** les étapes suivantes :
a) on réalise, en tant qu'éléments de structure séparés, les parties essentielles (30, 40) des plates-formes (3, 4), des aubes (2a, 2b) et des zones de raccordement (6a, 6b) aubes/plates-formes, par superposition ou enroulement des couches de fibres de renfort préimprégnées de résine à l'exception des couches externes devant former au moins la paroi de délimitation de la veine de flux gazeux à travers le redresseur,
b) on imidise lesdits éléments de structure séparés,
c) on assemble lesdits éléments de structure séparés et imidisés,
d) on ajoute les couches externes de fibres de renfort préimprégnées de résine pour constituer la pièce,
e) on dispose la pièce ainsi constituée dans un ensemble moule/contre-moule de polymérisation sous compression, et
f) on polymérise la pièce en la soumettant à des efforts de compression.

2. Procédé selon la revendication 1, **caractérisé par le fait que** l'on rajoute les couches externes de préimprégné frais en drapant la face intrados d'une aube et les parties adjacentes des faces en vis-à-vis des plates-formes, avec des premières couches de préimprégné de raccordement, et en drapant la face extrados d'une aube et les parties adjacentes des faces en vis-à-vis des plates-formes avec des deuxièmes couches de préimprégné de raccordement.

3. Procédé selon l'une des revendication 1 ou 2, **caractérisé par le fait que** l'on imidise les éléments de structure en leur faisant subir un réchauffement de 0,5°C/min, avec un palier intermédiaire 120 min à 250°C avant refroidissement.

4. Procédé selon la revendication 3, **caractérisé par le fait que** les éléments de structure sont soumis à un vide relatif de -50 mbars pendant toute la durée du cycle d'imidisation.

5. Procédé selon l'une quelconque des revendications 1 à 4, **caractérisé par le fait que** l'on soumet la pièce (1) à une compression de 35 bars lorsque sa température atteint 310°C, et on maintient cette compression jusqu'à la fin du refroidissement.

## Claims

1. Process for the manufacture of pieces (1) made of a composite material resistant to high temperature, such as guide vanes, said material containing reinforcing fibres embedded in a matrix of polyimide resin polymerized under the action of heat, said pieces (1) having an internal platform (3), an external platform (4) and at least one solid vane (2a, 2b) joining said platforms (3, 4), **characterized by** the following steps:
a) the essential parts (30, 40) of the platforms (3, 4), vanes (2a, 2b) and vane/platform connecting zones (6a, 6b) are produced, as separate structural elements, by superimposing or rolling up the layers of resin-preimpregnated reinforcing fibres, except for the external layers that are to form at least the wall for delimiting the gas stream across the guide,
b) said separate structural elements are imidized,
c) said imidized separate structural elements are assembled,
d) the external layers of resin-preimpregnated reinforcing fibres are added to form the piece,
e) the piece formed in this way is placed in a mould/counter mould unit for compression polymerization, and
f) the piece is polymerized by being subjected to compression forces.

2. Process according to Claim 1, **characterized in that** the external layers of fresh prepreg are added by draping the lower surface of a vane and the adjacent parts of the opposing faces of the platforms with first layers of connecting prepreg, and by draping the upper surface of a vane and the adjacent parts of the opposing faces of the platforms with second layers of connecting prepreg.

3. Process according to Claim 1 or 2, **characterized in that** the structural elements are imidized by being heated at 0.5°C/min with an intermediate stage of 120 min at 250°C before cooling.

4. Process according to Claim 3, **characterized in that** the structural elements are subjected to a relative vacuum of -50 mbar throughout the imidization cycle.

5. Process according to any one of Claims 1 to 4, **characterized in that** the piece (1) is subjected to a compression of 35 bar when its temperature reaches 310°C, and this compression is maintained until cooling is complete.

## Patentansprüche

1. Verfahren zur Fertigung von Stücken (1) aus Verbundmaterial, das gegen hohe Temperaturen beständig ist, wie etwa Beschaufelungen eines Gleichrichters, wobei das Verbundmaterial Verstärkungsfasern umfasst, die in eine Matrize aus heißpolymerisiertem Polyimidharz eingetaucht werden, wobei die Teile (1) eine interne Plattform (3), eine externe Plattform (4) und mindestens eine Vollschaufel (2a, 2b) aufweisen, die die Plattformen (3, 4) verbindet, **gekennzeichnet durch** die folgenden Schritte:
a) Herstellen, als getrennte Strukturelemente, der wesentlichen Teile (30, 40) der Plattformen (3, 4), der Schaufeln (2a, 2b) und der Anschlusszonen (6a, 6b) zwischen den Schaufeln und Plattformen durch Schichtung oder Aufwickeln von Schichten aus harzvorgetränkten Verstärkungsfasern, abgesehen von den äußeren Schichten, die mindestens die Begrenzungswand der Leitung des Gasstromes **durch** den Gleichrichter formen sollen,
b) Imidisieren der getrennten Strukturelemente,
c) Montieren der getrennten und imidisierten Strukturelemente,
d) Zufügen der äußeren Schichten aus harzvorgetränkten Verstärkungsfasern, um das Stück zu bilden,
e) Anordnen des so hergestellten Stücks in einem Komplex aus Form und Gegenform zur Polymerisation unter Verdichtung, und
f) Polymerisieren des Stücks, wobei es Verdichtungskräften unterzogen wird.

2. Verfahren nach Anspruch 1, **gekennzeichnet durch** die Tatsache, dass die äußeren frisch vorgetränkten Schichten hinzugefügt werden, indem die innere Wölbfläche einer Schaufel und der angrenzenden Teile der Flächen, die gegenüber den Plattformen liegen, mit den ersten Schichten der vorgetränkten Anschlusstücke umhüllt werden, und indem die äußere Wölbfläche einer Schaufel und der angrenzenden Teile der Flächen gegenüber den Plattformen mit zweiten Schichten von vorgetränkten Anschlusstücken umhüllt werden.

3. Verfahren nach einer der Ansprüche 1 oder 2, **gekennzeichnet durch** die Tatsache, dass die Strukturelemente imidisiert werden, indem sie einer Erwärmung von 0,5 °C/Min. ausgesetzt werden, mit einem Zwischenstadium von 120 Min. bei 250 °C vor der Abkühlung.

4. Verfahren nach Anspruch 3, **gekennzeichnet durch** die Tatsache, dass die Strukturelemente während der gesamten Dauer des Imidisationszyklus einem relativen Vakuum von -50 mBar unterzogen werden.

5. Verfahren nach irgendeinem der Ansprüche 1 bis 4, **gekennzeichnet durch** die Tatsache, dass das Teil (1) einer Verdichtung von 35 Bar unterzogen wird, während seine Temperatur 310 °C erreicht, und diese Verdichtung bis zum Ende der Abkühlung aufrecht erhalten wird.
